# EUROPÄISCHE PATENTANMELDUNG

(11) **EP 4 289 898 A2**
(43) Veröffentlichungstag der Anmeldung: **13.12.2023**
(21) Anmeldenummer: 23177861.4
(22) Anmeldetag: 07.06.2023
(51) Int. Cl.: C08L 23/10, C08L 95/00

(54) **ADDITIV FÜR ASPHALT SOWIE VERFAHREN ZUR HERSTELLUNG EINES ADDITIVS UND EINES ASPHALTS MIT EINEM DERARTIGEN ADDITIV**

(30) Priorität: 09.06.2022 DE 102022002044
(71) Anmelder: EcoPals GmbH, 10115 Berlin (DE)
(72) Erfinder: VARGA, Jonas Varga, 13359 Berlin (DE)
(74) Vertreter: Castell, Klaus

(57) **Zusammenfassung**

Die Erfindung betrifft ein Additiv für Asphalt, das Kunststoffe aufweist. Hierbei werden als Polyolefine Polyethylen und Polypropylen mit einem Kompatibilisator eingesetzt. Dies ermöglicht es, dass Polyolefine, die üblicherweise einer Müllverbrennungsanlage zugeführt werden, da für sie keine anderen Einsatzgebiete bekannt sind, einer sinnvollen Sekundärnutzung zugeführt werden können.

## Beschreibung

Die Erfindung betrifft ein Additiv für Asphalt, das Kunststoffe aufweist. Außerdem betrifft die Erfindung ein Verfahren zur Herstellung eines Additivs und ein Verfahren zur Herstellung eines Asphalts mit einem derartigen Additiv.

Asphalt besteht aus Zugschlagstoffen, die in der Regel Steine in unterschiedlichen Sortierungen sind, und dem Asphaltbindemittel oder Bitumen, einem aus Erdöl gewonnen Produkt, das Asphalt einen Großteil seiner Komplexität verleiht. Die spezifische elementare Zusammensetzung von Asphaltbindemitteln hängt von der Art des Ursprungs der Grundstoffe, wie insbesondere des Rohöls ab. Da die Inhaltsstoffe hauptsächlich Kohlenwasserstoffe sind, besteht Bitumen aus einem hohen Anteil an Kohlenstoff (ca. 85 %) und Wasserstoffatomen in geringerem Ausmaß (ca. 10 %). Der Rest sind Heteroatome von Elementen von Stickstoff, Schwefel und Sauerstoff und Spuren von Mineralien wie Nickel, Eisen, Magnesium oder Vanadium.

Die Struktur, Ausrichtung und Art und Weise wie diese Atome angeordnet sind, um die komplexen Verbindungen zu bilden, aus denen Asphalt besteht, ist aufgrund der Anzahl organischer Verbindungen ein weniger gut definiertes Untersuchungsgebiet, was es erschwert, einen Asphalt durch dessen chemische Struktur zu charakterisieren. Nach dem Corbettkriterium gibt es jedoch Phasen und Kategorien, in die Asphaltmoleküle von Kohlenwasserstoffen basierend auf Polarität und Größe unterteilt werden können, nämlich gesättigte Aromaten, Harze, Asphaltene etc.

Als Bindemittel wurden auch Polymere vorgeschlagen. Polymere sind Materialien, die aus langen Molekülketten bestehen, die von einer sich wiederholenden Einheit gebildet werden. Aus Erdöl gewonnene Polymere sind in der Regel als Kunststoffe bekannt und ihre Ketten bestehen normalerweise hauptsächlich aus Kohlenstoff und Wasserstoff. Polymerketten können sich auf unterschiedliche Weise biegen und eine Vielzahl von Strukturen bilden, die sich auf die Eigenschaft des resultierenden Materials auswirken.

Innerhalb der verschiedenen Klassifizierungen von Kunststoffen gehören Polyolefine, insbesondere Polypropylen und Polyethylen, aufgrund ihrer kommerziellen Verwendung zu den häufigsten.

Polypropylen gilt als teilkristallines Polymer (außer ataktisches Polypropylen) und ist unpolar. Im Vergleich zu Polyethylen bietet die Methylgruppe im Polypropylen eine härtere Konsistenz und ein hitzebeständigeres Material. Abhängig von der Ausrichtung und Position der Methylgruppe kann sich Polypropylen innerhalb des Kristallinspektrums sehr unterschiedlich verhalten. Dies wird durch seine Taktik definiert, die normalerweise in drei Kategorien unterteilt ist: Isotaktik, Syndiotaktik und Ataktik. Hierbei ist die Isotaktik am kristallinsten und die Ataktik amorph.

Die Schmelzpunkte werden ebenfalls von der Taktik des Polypropylen beeinflusst. Der Schmelzpunkt liegt für eine perfekte isotaktische Variante bei 171 °C, er liegt bei 160 bis 166 °C für isotaktische kommerzielle Varianten und bei 130 °C für syndiotaktisches Polypropylen. Ataktisches Polypropylen kann bei Raumtemperatur nicht festbleiben und verhält sich als viskose Flüssigkeit.

Polyethylen gilt als teilkristallines Polymer und ist unpolar. Das Molekulargewicht der Wiederholungseinheit beträgt 42,08 g/mol. Im Gegensatz zu Polypropylen können die Polymerketten in Polyethylen enger angeordnet werden, was einen größeren Dichtebereich ermöglicht. Ohne die Methylgruppe und nur mit Wasserstoff gibt es mehr Platz für Polyethylenketten, um nebeneinander zu passen. Der Polyethylendichtebereich liegt zwischen 0,86 bis 0,97 g/cm³. Dies ist ein Bereich, in dem die molekulare Zusammensetzung nicht verändert wird, aber gleichzeitig je nach Wert unterschiedliche mechanische Eigenschaften aufweist.

Aufgrund dieses Bereichs können bekannte Polyethylenversionen in Abhängigkeit von polymeren Bedingungen, Katalysatoren, Druck und Temperatur entwickelt werden. Derartige Variationen sind Polyethylen hoher Dichte mit einer Dichte von über 0,941 g/cm³, das auf eine Weise hergestellt wird, die einen geringen Verzweigungsgrad fördert. Polyethylen mittlerer Dichte hat eine Dichte zwischen 0,926 und 0,940 g/cm³ und lineares Polyethylen niedriger Dichte hat eine Dichte zwischen 0,915 und 0,925 g/cm³. Darüber hinaus gibt es weiteres Polyethylen niederer Dichte mit einer Dichte zwischen 0,910 und 0,940 g/cm³ und Very Low-Density Polyethylen mit einer Dichte zwischen 0,880 und 0,915 g/cm³.

Der Schmelzpunkt von Polyethylen ändert sich je nach Typ und liegt jedoch im Allgemeinen zwischen 120 und 130 °C bei Polyethylen mittlerer Dichte und Polyethylen hoher Dichte und bei Polyethylen mit geringerer Dichte zwischen 105 und 115 °C. Die theoretische Obergrenze des Polyethylenschmelzpunktes liegt bei 146 °C.

Daraus ergeben sich eine Vielzahl an Variationsmöglichkeiten, um aus Rohöl oder Kunststoffen Zuschlagsstoffe für die Herstellung von Asphalt vorzuschlagen. Dabei sollten Umweltaspekte ebenso wie praktische Aspekte des Herstellungsverfahrens berücksichtigt werden.

Der Erfindung liegt daher die Aufgabe zu Grunde, ein Additiv für ein Asphalt, ein Verfahren zur Herstellung eines Additivs und ein Verfahren zur Herstellung eines Asphalts vorzuschlagen, die in der Praxis leicht einsetzbar sind und deren Grundmaterialien im ökologischen Kreislauf bereitgestellt werden können.

Diese Aufgabe wird mit einem Additiv nach Anspruch 1 gelöst. Ein Verfahren zur Herstellung eines Additivs beschreibt Anspruch 13 und der Anspruch 14 beschreibt ein Verfahren zu Herstellung eines Asphalts mit einem derartigen Additiv. Vorteilhafte Weiterbildungen sind Gegenstand der Unteransprüche.

Der Erfindung liegt die Erkenntnis zu Grunde, dass auf der Basis von nicht recycelbaren Polyolefinenabfällen, wie Polyethylen und/oder Polypropylen, ein Additiv hergestellt werden kann, das bekannte Additive zumindest teilweise ersetzen kann und die nicht recycelbaren Polyolefinenabfälle einer sinnvollen Verwendung zuführt. Dadurch wird Rohöl eingespart und die nicht recycelbaren Polyolefinenabfälle werden sinnvoll entsorgt. Diese Additive dienen in Kombination mit Zuschlagstoffen und Bitumen als Asphalt für den Straßenbau.

Die Erfindung bietet somit ein Rezept zur Herstellung einer neuen Art von additiviertem Asphalt, der aus ausgewählten nicht recycelbaren Kunststoffabfallströmen, Kompatibilisator, Bitumen und Zuschlagstoffen besteht. Die Quellung der Polymerketten in den leichten Phasen des Bitumens wird durch das beschriebene Rezept begünstigt. Durch die Bildung von polymeren Strukturen innerhalb der Asphalt- und Adhäsionsfläche zwischen Bindemittel, Abfallpolymer und Zuschlagstoffen werden Teile der Polymereigenschaften auf das Asphaltsystem übertragen. So wird eine Verbesserung der rheologischen Eigenschaften wie Wasserbeständigkeit, Spurrillenbeständigkeit, Viskosität und Alterungsverhalten erreicht.

Als Materialquelle für die Zusatzstoffe dienen ausgewählte Kunststoffe und insbesondere End-of-Life-Material. Die verwendeten Polyolefine bestehen aus Polyethylen und Polypropylen der Familie der thermoplastischen Plastomere. Als Kompatibilisator wird vorzugsweise ein Ethylen-Methylacrylat-Glycidylmethacrylat-Terpolymer eingesetzt.

Als vorteilhaft hat es sich herausgestellt, wenn die Kunststoffe eine Zusammensetzung zwischen 50 % und 100 %, vorzugsweise über 75 % und besonders bevorzugt über 85 % an Polyolefinen aufweisen.

Entsprechend ist es vorteilhaft, wenn die Kunststoffe eine Zusammensetzung zwischen 20 % und 70 %, vorzugsweise zwischen 25 % und 60 % und besonders bevorzugt von etwa 30 % an Polyethylen aufweisen.

Weiterhin ist es vorteilhaft, wenn die Kunststoffe eine Zusammensetzung von zwischen 30 % und 80 %, vorzugsweise zwischen 40 % und 75 % und besonders bevorzugt etwa 70 % Polypropylen aufweisen.

Gute Ergebnisse wurden mit Kunststoffabfällen mit einer Zusammensetzung aus mehr als 50 % Polyolefinen in Form von Polyethylen mit Dichten zwischen 0,86 und 0,97 g/cm³ und Polypropylen vom syndiotaktischen oder isotaktischen Typ erreicht. Das Material kann beispielsweise bis zu 50 % Polymere, die nicht den Polyolefinen zuzuordnen sind und möglichst weniger als 1 % Polyvinylchlorid enthalten.

Vorteilhaft ist es, wenn darauf geachtet wird, dass die Verunreinigungen weniger als 8 % Gummi, Stein, Holz und Papier und weniger als 2 % an Metallen, nämlich Eisen, Titan, Blei, Zirkonium, Kupfer und Strontium aufweisen. Außerdem sollten keine Bestandteile enthalten sein, die toxische Aerosole oder Dämpfe über 200 °C erzeugen. Dies kann über eine thermogravimetrische Analyse ermittelt werden.

Vorteilhaft ist es weiterhin, wenn die Partikelgröße der Kunststoffabfälle zwischen 600 µm und 2 mm liegt. Diese Partikel können beispielsweise auch als Pellets gepresst zur Verfügung gestellt werden.

Das Additiv kann eine Zusammensetzung von 0,1 % bis 5 %, vorzugsweise zwischen 0,1 % und 2 % und besonders bevorzugt etwa 1 % eines Produktes aus Ethylen-Methylacrylat-Glycidylmethacrylat-Terpolymer aufweisen, um die Einlagerung der Polymere in die Maltene des Asphalts zu erleichtern und umso stabilere Bindungen zu ermöglichen. Das Additiv kann eine Zusammensetzung mit 0,1 % bis 5 % StyrolButadien-Blockelastomeren aufweisen

Außerdem kann das Additiv eine Zusammensetzung von 0,1 % bis 5 % an Schwefel oder an oxidierten Polyolefin und Schwefel aufweisen.

Weiterhin kann das Additiv eine Zusammensetzung von 0,1 % bis 5 % an Ethylen-Propylen-Dien-Monomer (EPDM) aufweisen.

Das Additiv kann eine Zusammensetzung von 0,1 % bis 5 % Maleinsäure, oder ein Maleinsäureanhydrid (MAH) aufweisen. Daher wird vorgeschlagen, dass das Additiv Glycidylmethacrylat oder eine Glycidylmethacrylatgruppe aufweist und vorzugsweise auch Ethylen-Acryl-Esther-Terpolymer.

Weiterhin ist es vorteilhaft, wenn die für die Herstellung des Additivs verwendeten Kunststoffe eine Dichte zwischen 0,80 und 1,5 g/cm³ und vorzugsweise zwischen 0,90 und 0,98 g/cm³ aufweisen.

Bei der Herstellung dieses Additivs werden die Kunststoffe vorzugsweise trocken mit dem Kompatibilisator vermischt.

Bei der Herstellung eines Asphalts mit einem derartigen Additiv werden als Aggregate zwischen 0,05 % und 1,5 %, vorzugsweise etwa 0,6 % Additiv und zwischen 3 % und 10 %, vorzugsweise etwa 5,4 % Bitumen mit Zuschlagstoffen vermischt. Die Zuschlagstoffe sind Reststoffe, die als Aggregate bezeichnet werden. Sie liegen somit bei 88,5 % bis 97 % und vorzugsweise bei etwa 94 %. In der Praxis werden 0 % bis 15 % des Bitumengewichts durch das Additiv ersetzt.

Bei einem derartigen Verfahren ist es vorteilhaft, wenn die Aggregate im Asphaltmischer eine Temperatur zwischen 120 °C und 250 °C und vorzugsweise von etwa 180 °C erreichen.

Das Additiv sollte über eine Dosiervorrichtung dem Mischer zugesetzt werden und mit den Zuschlagstoffen für mindestens 10 Sekunden vermischt werden.

Vorteilhaft ist es, wenn das Bitumen bei einer Temperatur von mindestens 120 °C und nicht mehr als 220 °C gemischt wird.

Der Asphalt sollte während der Verdichtung zwischen 120 °C und 165 °C und vorzugsweise bei etwa 135 °C gehalten werden.

Ein bevorzugtes Ausführungsbeispiel wird im Folgenden beschrieben.

Es zeigt
- Abbildung 1: eine Kornzusammensetzung einer mit dem erfindungsgemäßen Additiv hergestellten ACLDS-Deckschicht,
- Abbildung 2: eine proportionale Zusammensetzung der Asphaltmischung,
- Abbildung 3: die Beständigkeit gegen Rissbildung und
- Abbildung 4: das Steifigkeitsmodul vor und nach Alterungstests.

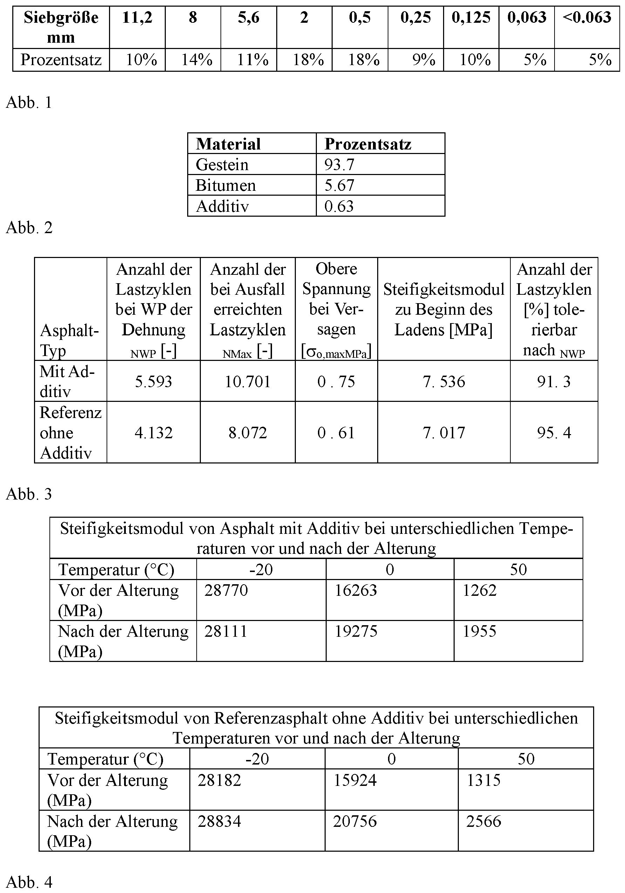

Im vorliegenden Beispiel wird ein AC 11 DS Asphalt mit einem 50/70 Bitumen und dem erfindungsgemäßen Additiv modifiziert. Die Kornzusammensetzung ist in Abbildung 1 dargestellt. Das Additiv hat eine Zusammensetzung von Abfallpolyolefinen mit mehr als 50 % Polypropylen und weniger als 50 % Polyethylen sowie weniger als 3 % Verunreinigungen. Als Verunreinigungen werden Eisen, Titan, Chlorid, Blei, Zink und andere Metalle verstanden.

Die Abfallpolyolefine stammen aus Abfallmaterial von einem Recycler. Diese Abfallpolyolefine werden einem Abfallstrom entnommen, der für die Verbrennung bestimmt ist und im Hinblick auf seine Zusammensetzung für andere Verwendungen nicht geeignet ist.

Aus diesem Abfallstrom werden leicht komprimierte, poröse Partikel von nicht mehr als 3 cm Länge oder Durchmesser hergestellt, die beim Mischen zu Partikeln kleiner als 5 mm zerkleinert werden können.

Das Additiv hat mindestens 1 % Ethylen-Methylacrylat-Glycidylmethacrylat-Terpolymer.

Die proportionale Zusammensetzung der Asphaltmischung ist in der Abbildung 2 gezeigt.

Die Asphaltmischung wurde mit einem Labormischer bei 165 °C gleichmäßiger Temperatur gemäß EN 12697-35 hergestellt. Zuschlagstoffe, die bei 170 °C vortemperiert waren, wurden zuerst in die Mischung gegeben, gefolgt vom Additiv, das als Flakes zugegeben wird und mit den übrigen Materialien etwa zwei Minuten trocken gemischt wird. Anschließend wird Bitumen mit 150 °C zugegeben und mit den anderen Bestandteilen für etwa zwei Minuten vermischt.

Für die verschiedenen Prüfungen wurden Marshallprüfkörper nach EN 12697-30 hergestellt. Zusätzlich wurden Asphaltprüfplatten nach EN 12697-33 hergestellt. Alle Prüfungen wurden nach der europäischen Norm der Reihe EN 12697 durchgeführt.

Zunächst wurde die Wasserempfindlichkeit nach EN 12697-12 und EN 12697-26 ermittelt. Das ITRS-Ergebnis für den Asphalt mit dem erfindungsgemäßen Additiv liegt bei 86,9 % und das ITRS-Ergebnis für nicht additivierten Asphalt liegt als Referenz bei 85,2 %.

Außerdem wurden Spurrillenprüfungen vorgenommen und die Verformungsbeständigkeit nach EN 12697 Teil 20 geprüft. Der max. Rut-depth-Wert liegt bei erfindungsgemäß additiviertem Asphalt bei 3,9 mm und der max. Rut-depth-Referenzwert bei nicht additiviertem Asphalt liegt bei 14,1 mm.

Ferner wurde auch die Beständigkeit gegen Rissbildung nach EN 12697-24 geprüft. Die Tests wurden nicht mit konstanter Spannungsamplitude, sondern mit allmählich steigender Beanspruchung durchgeführt. Die Spannungen wurden nach jeweils drei hundert konstanten Ladezyklen um 0,02 MPa erhöht. Diese Tests wurden bei 20 °C durchgeführt und haben zu dem in Figur 3 gezeigten Ergebnis geführt.

Letztlich wurde das Steifigkeitsmodul vor und nach Alterungstests gemäß EN 12697-26 ermittelt und es wurde die induzierte Alterung der frischen Mischung gemäß EN TS 12697-52 durch Erhitzung auf 85 °C für sieben Tage in einem belüfteten Wärmeschrank ermittelt. Die Ergebnisse hierzu sind in Abbildung 4 dargestellt.

Für Leistungsbeurteilungen im Allgemeinen wird die Asphaltzusammensetzung einschließlich Sieblinie, Bindemittelgehalt und Additive gemessen. Leistungsparameter werden an Probekörpern gemessen, die nach DIN EN 12697-30 (TP Asphalt-StB, Teil 30) erstellt werden. Mithilfe dieser Probekörper können unter anderen die folgenden Eigenschaften bestimmt werden:

Hohlraumgehalt - Der Hohlraumgehalt ist nach EN 12697-8 unter den in EN 13108-20:2016, D.2, definierten Bedingungen zu bestimmen.

Wasserempfindlichkeit - Die Wasserempfindlichkeit, angegeben als ein Verhältnis indirekter Zugfestigkeit oder Druckfestigkeitsverhältnis, ist nach EN 12697-12 (Germany: TP Asphalt-StB, Part 12) unter den in EN 13108-20 :2016, D.3, definierten Bedingungen zu bestimmen.

Widerstand gegen bleibende Verformung (Spurbildungstest) - Der Widerstand gegen bleibende Verformung im Spurbildungstest ist nach EN 12697-22 (Germany: TP Asphalt-StB, Part 22) unter den in EN 13108-20:2016, D.6, definierten Bedingungen zu bestimmen.

Steifigkeit - Bestimmung des temperaturabhängigen Steifigkeitsmoduls mittels geteilter Zugwellversuche nach DIN EN 12697-26 (TP Asphalt-StB, Teil 26).

Widerstand gegen Ermüdung - Bestimmung der Dauerfestigkeit nach DIN EN 12697-24 (TP Asphalt-StB, Teil 24).

Kälteverhalten - Bestimmung des temperaturabhängigen Steifigkeitsmoduls mittels geteilter Zugwellversuche nach DIN EN 12697-26 (TP Asphalt-StB, Teil 26). DIN EN 12697-46:2020-05.

Alterungsverhalten - Schritte zur Beurteilung von Alterungseigenschaften: 1. Alterung der Asphaltmischung durch Lagerung in einem lüftungsgelüfteten Heizschrank gemäß TS/EN 12697-52, 2. Herstellung von Asphaltprobenplatten nach TP Asphalt-StB, Teil 33, 3. Bestimmung des temperaturabhängigen Steifigkeitsmoduls mittels Spaltzug-Schwellversuch nach TP Asphalt-StB, Teil 26 und 4. Prüfung der Eigenschaften von Bindemitteln, die aus der Asphaltmischung gewonnen werden: i. Heißextraktion und Rückgewinnung des Bindemittels nach DIN EN 12697-1 und DIN EN 12697-3 (TP Asphalt-StB, Teil 1 & Teil 3), ii. Bestimmung des temperaturabhängigen komplexen Schermoduls G* und der Äquisteifigkeitstemperatur T_{BTSV} nach DIN EN 17643, iii. Bestimmung der Verformungs- und Abstandseigenschaften durch Kraftduktilitätsprüfungen nach DIN EN 13589/13703, iv. Bestimmung des Erweichungspunktrings und der Kugel nach DIN EN 1427.

## Patentansprüche

1. Additiv für Asphalt, das Kunststoffe aufweist, ***dadurch gekennzeichnet, dass*** es als Polyolefine Polyethylen und Polypropylen und einen Kompatibilisator aufweist.

2. Additiv nach Anspruch 1, ***dadurch gekennzeichnet, dass*** die Kunststoffe eine Zusammensetzung zwischen 50 % und 100 %, vorzugsweise über 75 % und besonders bevorzugt über 85 % an Polyolefinen aufweisen.

3. Additiv nach einem der vorhergehenden Ansprüche, ***dadurch gekennzeichnet, dass*** die Kunststoffe eine Zusammensetzung zwischen 20 % und 70 %, vorzugsweise zwischen 25 % und 60 % und besonders bevorzugt etwa 30 % an Polyethylen aufweisen.

4. Additiv nach einem der vorhergehenden Ansprüche, ***dadurch gekennzeichnet, dass*** die Kunststoffe eine Zusammensetzung von zwischen 30 % und 80 %, vorzugsweise zwischen 40 % und 75 % und besonders bevorzugt etwa 70 % Polypropylen aufweisen.

5. Additiv nach einem der vorhergehenden Ansprüche, ***dadurch gekennzeichnet, dass*** es eine Zusammensetzung von 0,1 % bis 5 %, vorzugsweise zwischen 0,1 % und 2 % und besonders bevorzugt etwa 1 % eines Produktes aus Ethylen-Acryl-Ester-Terpolymer-Maleinsäure-Glycidylmethacrylat aufweist.

6. Additiv nach einem der vorhergehenden Ansprüche, ***dadurch gekennzeichnet, dass*** es eine Zusammensetzung von 0,1 % bis 5 % Styrol-Butadien-Blockelastomere aufweist.

7. Additiv nach einem der vorhergehenden Ansprüche, ***dadurch gekennzeichnet, dass*** es eine Zusammensetzung von 0,1 % bis 5 % Schwefel oder oxidierte Polyolefine und Schwefel aufweist.

8. Additiv nach einem der vorhergehenden Ansprüche, ***dadurch gekennzeichnet, dass*** es eine Zusammensetzung von 0,1 % bis 5 % an Ethylen-Propylen-Dien-Monomer (EPDM) aufweist.

9. Additiv nach einem der vorhergehenden Ansprüche, ***dadurch gekennzeichnet, dass*** es Maleinsäure oder ein Maleinsäureanhydrid (MAH) aufweist.

10. Additiv nach einem der vorhergehenden Ansprüche, ***dadurch gekennzeichnet, dass*** es Glycidylmethacrylat oder eine Glycidylmethacrylat-Gruppe (GMA) aufweist.

11. Additiv nach einem der vorhergehenden Ansprüche, ***dadurch gekennzeichnet, dass*** es Ethylen-Acryl-Ester-Terpolymer aufweist.

12. Additiv nach einem der vorhergehenden Ansprüche, ***dadurch gekennzeichnet, dass*** die Kunststoffe eine Dichte zwischen 0,80 und 1,5 g/cm³, vorzugsweise zwischen 0,90 und 0,98 g/cm³ aufweisen.

13. Verfahren zur Herstellung eines Additivs nach einem der vorhergehenden Ansprüche, ***dadurch gekennzeichnet, dass*** die Kunststoffe trocken mit dem Kompatibilisator vermischt werden.

14. Verfahren zur Herstellung eines Asphalts mit einem Additiv nach einem der vorhergehenden Ansprüche 1 bis 12, ***dadurch gekennzeichnet, dass*** als Aggregate zwischen 0,05 % und 1,5 %, vorzugsweise etwa 0,6 % Additiv und zwischen 3 % und 10 %, vorzugsweise etwa 5,4 % Bitumen mit Zuschlagstoffen vermischt werden.

15. Verfahren nach Anspruch 14, ***dadurch gekennzeichnet, dass*** die Aggregate mit dem Kompatibilisator in einem Asphaltmischer vermischt werden und dabei eine Temperatur zwischen 120 °C und 250 °C, vorzugsweise 180 °C erreichen.

16. Verfahren nach einem der Ansprüche 14 oder 15, ***dadurch gekennzeichnet, dass*** das Additiv über eine Dosiervorrichtung dem Mischer zugesetzt und mit den Zuschlagstoffen für mindestens 10 Sekunden vermischt wird.

17. Verfahren nach einem der Ansprüche 14 bis 16, ***dadurch gekennzeichnet, dass*** das Bitumen nach den Zuschlagstoffen und nach dem Additiv zugegeben und somit für einen Zeitraum von 10 bis 30 Sekunden, vorzugsweise etwa 20 Sekunden gemischt wird.

18. Verfahren nach einem der Ansprüche 14 bis 17, ***dadurch gekennzeichnet, dass*** das Bitumen bei einer Temperatur von mindestens 120 °C und nicht mehr als 210 °C gemischt wird.

19. Verfahren nach einem der Ansprüche 14 bis 18, ***dadurch gekennzeichnet, dass*** der Asphalt während der Verdichtung zwischen 120 °C und 165 °C und vorzugsweise bei etwa 135 °C gehalten wird.
